# EUROPEAN PATENT APPLICATION

(11) **EP 4 442 757 A1**
(43) Date of publication of application: **09.10.2024**
(21) Application number: 22901619.1
(22) Date of filing: 14.11.2022
(51) Int. Cl.: C08L 25/08, C08L 25/12, C08L 51/04, C08L 35/00, C08L 33/10, C08K 5/3432, C08K 5/3492

(54) **THERMOPLASTIC RESIN COMPOSITION AND MOLDED PRODUCT MANUFACTURED FROM SAME**

(30) Priority: 30.11.2021 KR 20210169068
(71) Applicant: LOTTE CHEMICAL CORPORATION, Seoul 05551 (KR)
(72) Inventor: KIM, Jungwook, Uiwang-si, Gyeonggi-do 16073 (KR); PARK, Jieun, Uiwang-si, Gyeonggi-do 16073 (KR); KANG, Seongwoo, Uiwang-si, Gyeonggi-do 16073 (KR)
(74) Representative: Germain Maureau
(86) International application number: PCT/KR2022/017876
(87) International publication number: WO 2023/101261

(57) **Abstract**

Provided are a thermoplastic resin composition and a molded product using the same, the thermoplastic resin composition including, based on 100 parts by weight of a base resin including (A) 20 wt% to 50 wt% of an acrylate-based graft copolymer; (B) 2 wt% to 20 wt% of an aromatic vinyl-vinyl cyanide copolymer; (C) 25 wt% to 60 wt% of an alpha-methyl styrene-based copolymer; (D) 1 wt% to 10 wt% of an N-substituted maleimide-based copolymer; and (E) 1 wt% to 10 wt% of an alkyl (meth)acrylate-based resin, (F) 0.4 parts by weight to 2 parts by weight of a first sterically hindered amine represented by Chemical Formula 1; and (G) 0.4 parts by weight to 2 parts by weight of a second sterically hindered amine represented by Chemical Formula 2. 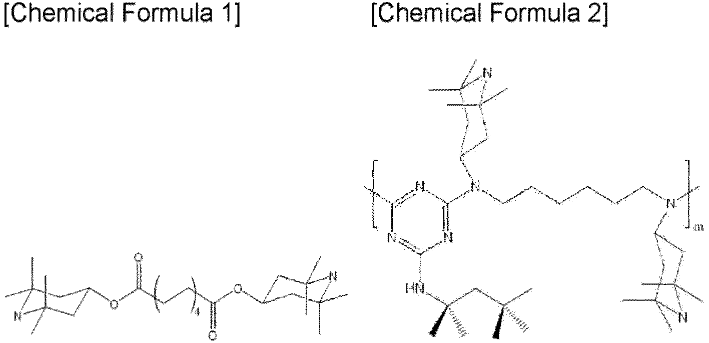 (In Chemical Formula 2, m is an integer from 2 to 20.)

## Description

### [Technical Field]

The present invention relates to a thermoplastic resin composition and a molded product using the same.

### [Background Art]

Recently, a thermoplastic resin variously applied to electric/electronic products, automobiles, construction materials, leisure goods, and the like has been rapidly replacing a conventional glass or metal area. Accordingly, demand for a thermoplastic resin capable of realizing improved impact resistance, weather resistance, molding processability, and high-quality appearance is being increased.

In general, when an acrylonitrile-butadiene-styrene copolymer resin (hereinafter, ABS resin) is used as the thermoplastic resin, because the ABS resin includes a butadiene-based rubbery polymer including chemically unstable double bonds as a rubber component, and the rubber component may be easily aged by ultraviolet (UV), weather resistance and light resistance are not sufficient. Accordingly, when left outside for a long time, the ABS resin is discolored and exhibits large property deterioration, as time passes and accordingly, is not suitable for outdoor use exposed to sunlight.

On the contrary, an acrylonitrile-styrene-acrylate copolymer resin (hereinafter, ASA resin) uses a chemically stable acrylate-based rubbery polymer instead of the butadiene-based rubbery polymer as the rubber component and thus is known to solve the discoloring and property deterioration problems of the ABS resin according to aging of the rubber component due to ultraviolet (UV). In addition, the ASA resin has improved moldability, chemical resistance, and thermal stability and the like as well as weather resistance.

Recently, requirements for a non-painted thermoplastic resin usable without a painting process have been increased according to an environmentally-friendly trend. The non-painted thermoplastic resin should have excellent scratch resistance, colorability, impact resistance, weather resistance, and the like, for a non-painted molded product is used as it is, and recently, as the requirements for physical properties have increased, attempts to apply ASA resin are increasing.

Such ASA resins generally further include an ultraviolet (UV) stabilizer to enhance weather resistance, but the ultraviolet (UV) stabilizer may improve the weather resistance but has a problem of deteriorating overall properties such as impact resistance and heat resistance.

Accordingly, it is necessary to provide a thermoplastic resin composition capable of realizing excellent weather resistance, while securing overall properties of a molded product using the same.

### [Disclosure]

### [Description of the Drawings]

An embodiment provides a thermoplastic resin composition having excellent weather resistance while having improved impact resistance and heat resistance and a molded product using the same.

According to an embodiment, provided is a thermoplastic resin composition that includes, based on 100 parts by weight of a base resin including (A) 20 to 50 wt% of an acrylate-based graft copolymer; (B) 2 to 20 wt% of an aromatic vinyl-vinyl cyanide copolymer; (C) 25 to 60 wt% of an alpha-methyl styrene-based copolymer; (D) 1 to 10 wt% of an N-substituted maleimide-based copolymer; and (E) 1 to 10 wt% of an alkyl (meth)acrylate-based resin, (F) 0.4 to 2 parts by weight of a first sterically hindered amine represented by Chemical Formula 1; and (G) 0.4 to 2 parts by weight of a second sterically hindered amine represented by Chemical Formula 2:

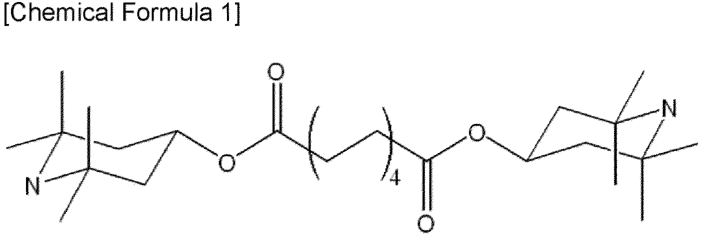

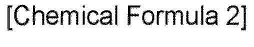

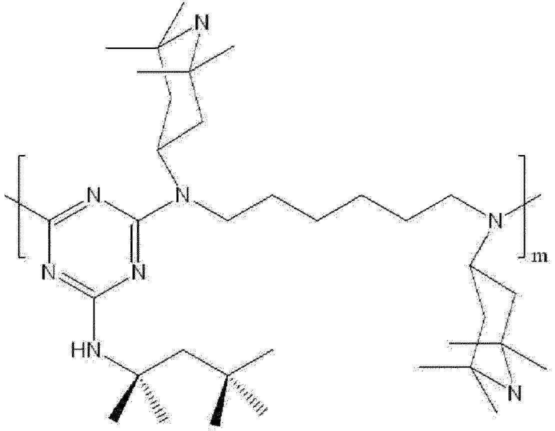

In Chemical Formula 2, m is an integer from 2 to 20.

The (A) acrylate-based graft copolymer may include a core including an acrylate-based rubbery polymer, and a shell formed by grafting a monomer mixture including an aromatic vinyl compound and a vinyl cyanide compound to the core.

The acrylate-based rubbery polymer may be a crosslinked polymer of monomers including ethyl acrylate, butyl acrylate, 2-ethylhexyl acrylate, hexyl acrylate, or a combination thereof.

The (A) acrylate-based graft copolymer may include 20 to 60 wt% of the acrylate-based rubbery polymer based on 100 wt%.

An average particle diameter of the acrylate-based rubbery polymer may be 100 to 800 nm.

The (A) acrylate-based graft copolymer may be an acrylonitrile-styrene-acrylate graft copolymer.

The (B) aromatic vinyl-vinyl cyanide copolymer may be a copolymer of a monomer mixture including 60 to 80 wt% of an aromatic vinyl compound and 20 to 40 wt% of a vinyl cyanide compound.

A weight average molecular weight of the (B) aromatic vinyl-vinyl cyanide copolymer may be 80,000 to 200,000 g/mol.

The (B) aromatic vinyl-vinyl cyanide copolymer may be a styrene-acrylonitrile copolymer.

The (C) alpha-methyl styrene-based copolymer may be a copolymer of a monomer mixture including 40 to 75 wt% of alpha-methyl styrene, 10 to 30 wt% of a vinyl cyanide compound, and 15 to 35 wt% of an aromatic vinyl compound.

In the (C) alpha-methyl styrene-based copolymer, the aromatic vinyl compound may be selected from styrene that is substituted or unsubstituted with a halogen or a C1 to C10 alkyl group (but not including alpha-methyl styrene) and a combination thereof, and the vinyl cyanide compound may be selected from acrylonitrile, methacrylonitrile, fumaronitrile, and a combination thereof.

The (C) alpha-methyl styrene-based copolymer may be an alpha-methyl styrene-styrene-acrylonitrile copolymer.

The (D) N-substituted maleimide-based copolymer may include 20 to 60 wt% of an N-substituted maleimide-derived component based on 100 wt%.

The (D) N-substituted maleimide-based copolymer may be an N-phenyl maleimide-styrene-maleic anhydride (PMI-SM-MAH) copolymer.

A glass transition temperature of the (E) alkyl (meth)acrylate-based resin may be 100 to 150 °C.

The (E) alkyl (meth)acrylate-based resin may be a polymethyl methacrylate resin.

A weight ratio of the (F) first sterically hindered amine and (G) second sterically hindered amine may be 1:5 to about 5:1.

The thermoplastic resin composition may further include at least one additive selected from a flame retardant, a nucleating agent, a coupling agent, filler, a plasticizer, an impact modifier, a lubricant, an antibacterial agent, a release agent, a heat stabilizer, an antioxidant, an ultraviolet ray absorber, an antistatic agent, a pigment, and a dye.

According to another embodiment, a molded product using the aforementioned thermoplastic resin composition is provided.

The thermoplastic resin composition having excellent impact resistance and heat resistance, as well as excellent weather resistance, and a molded product using the same are provided.

### [Mode for Invention]

Hereinafter, embodiments of the present invention are described in detail. However, these embodiments are exemplary, the present invention is not limited thereto and the present invention is defined by the scope of claims.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using a dynamic light scattering analysis equipment.

In the present specification, unless otherwise mentioned, the weight average molecular weight is measured by dissolving a powder sample in tetrahydrofuran (THF) and then performing gel permeation chromatography (GPC) with a 1200 series made by Agilent Technologies Inc. (a standard sample is polystyrene made by Shodex).

A thermoplastic resin composition according to an embodiment includes, based on 100 parts by weight of a base resin including (A) 20 to 50 wt% of an acrylate-based graft copolymer; (B) 2 to 20 wt% of an aromatic vinyl-vinyl cyanide copolymer; (C) 25 to 60 wt% of an alpha-methyl styrene-based copolymer; (D) 1 to 10 wt% of an N-substituted maleimide-based copolymer; and (E) 1 to 10 wt% of an alkyl (meth)acrylate-based resin, (F) 0.4 to 2 parts by weight of a first sterically hindered amine represented by Chemical Formula 1; and (G) 0.4 to 2 parts by weight of a second sterically hindered amine represented by Chemical Formula 2.

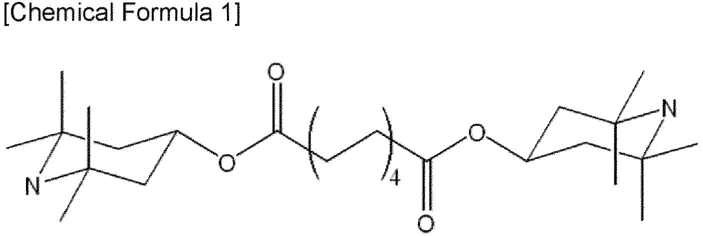

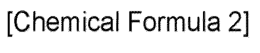

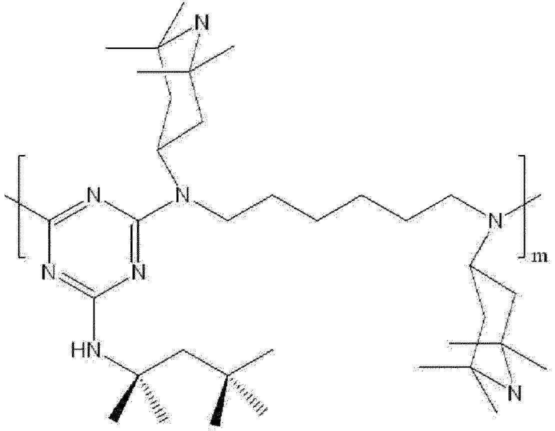

In Chemical Formula 2, m is an integer from 2 to 20.

Hereinafter, each component of the thermoplastic resin composition is described in detail.

### (A) Acrylate-based graft copolymer

In an embodiment, (A) the acrylate-based graft copolymer may be prepared by graft polymerizing a monomer mixture including an aromatic vinyl compound and a vinyl cyanide compound on a core including an acrylate-based rubbery polymer.

The (A) acrylate-based graft copolymer may be prepared by any method known to those skilled in the art.

The preparation method may be a conventional polymerization method, for example, emulsion polymerization, suspension polymerization, solution polymerization, bulk polymerization, or the like. For a non-limiting example, it may be prepared by a method including preparing an acrylate-based rubbery polymer and graft-polymerizing a monomer mixture including an aromatic vinyl compound and a vinyl cyanide compound, on a core formed of one or more layers of the acrylate-based rubbery polymer, to form one or more shells.

The acrylate-based rubbery polymer may be a crosslinked polymer prepared by using an acrylate-based monomer as a main monomer. The acrylate-based compound may be for example ethyl acrylate, butyl acrylate, 2-ethylhexyl acrylate, hexyl acrylate, or a combination thereof.

The acrylate-based monomer may be copolymerized with one or more other radically polymerizable monomer. When copolymerized, an amount of the one or more other radically polymerizable monomer may be 5 to 30 wt%, and specifically 10 to 20 wt% based on a total weight of the acrylate-based rubbery polymer.

The aromatic vinyl compound included in the shell may be at least one selected from styrene, α-methyl styrene, p-methyl styrene, p-t-butyl styrene, 2,4-dimethyl styrene, chlorostyrene, vinyltoluene, or vinylnaphthalene, but is not limited thereto.

The vinyl cyanide compound included in the shell may be at least one selected from acrylonitrile, methacrylonitrile, and fumaronitrile, but is not limited thereto.

The acrylate-based rubbery polymer may be included in 20 to 60 wt%, for example 30 to 60 wt%, for example 40 to 60 wt% based on 100 wt% of the (A) acrylate-based graft copolymer.

In the shell formed by graft-polymerizing the monomer mixture including the aromatic vinyl compound and the vinyl cyanide compound on the acrylate-based rubbery polymer, the shell may be a copolymer of the monomer mixture of the aromatic vinyl compound and the vinyl cyanide compound in a weight ratio of 5 : 5 to 8 : 2, for example 5 : 5 to 7 : 3.

In an embodiment, the (A) acrylate-based graft copolymer may be an acrylonitrile-styrene-acrylate graft copolymer (g-ASA).

In an embodiment, the acrylate-based rubbery polymer of the (A) acrylate-based graft copolymer may have an average particle diameter, for example 100 to 800 nm, for example 100 to 700 nm, for example 100 to 600 nm, for example 100 to 500 nm, for example 200 to 500 nm, for example 200 to 400 nm.

When the average particle diameter of the acrylate-based rubbery polymer is within the above range, the thermoplastic resin composition including the same may have excellent mechanical properties such as impact resistance and tensile strength and appearance characteristics.

In an embodiment, the (A) acrylate-based graft copolymer may be included in an amount of 20 to 50 wt%, for example 30 to 50 wt%, for example 35 to 45 wt%, based on 100 wt% of the base resin.

Within the above weight range, the thermoplastic resin composition including the same may have excellent physical properties such as impact resistance.

### (B) Aromatic vinyl-vinyl cyanide copolymer

In an embodiment, the (B) aromatic vinyl-vinyl cyanide copolymer has a separate phase from the aforementioned acrylate-based graft copolymer. The acrylate-based graft copolymer functions as a domain phase, and the aromatic vinyl-vinyl cyanide copolymer functions as a matrix phase.

In an embodiment, the (B) aromatic vinyl-vinyl cyanide copolymer may be a copolymer of a monomer mixture including an aromatic vinyl compound and a vinyl cyanide compound. The (B) aromatic vinyl-vinyl cyanide copolymer may have a weight average molecular weight of greater than or equal to 80,000 g/mol, for example greater than or equal to 85,000 g/mol, for example greater than or equal to 90,000 g/mol, and for example less than or equal to 200,000 g/mol, for example less than or equal to 150,000 g/mol, for example 80,000 to 200,000 g/mol, for example 80,000 to 150,000 g/mol.

The aromatic vinyl compound may be one or more selected from styrene, alpha-methyl styrene, p-methyl styrene, p-t-butyl styrene, 2,4-dimethyl styrene, chlorostyrene, vinyltoluene, and vinyl naphthalene.

The vinyl cyanide compound may be one or more selected from acrylonitrile, methacrylonitrile, and fumaronitrile.

In an embodiment, the (B) aromatic vinyl-vinyl cyanide copolymer may be styrene-acrylonitrile copolymer (SAN).

In an embodiment, the (B) aromatic vinyl-vinyl cyanide copolymer may be included in an amount of 2 to 20 wt%, for example 2 to 15 wt%, for example 2 to 10 wt% based on 100 wt% of the base resin. Within the above weight range, the thermoplastic resin composition including the same may have excellent physical properties such as heat resistance and fluidity.

### (C) Alpha-methyl styrene (a-methyl styrene)-based copolymer

In an embodiment, the (C) alpha-methyl styrene-based copolymer may improve the heat resistance of a thermoplastic resin composition.

The (C) alpha-methyl styrene-based copolymer may be prepared by using conventional manufacturing methods, such as emulsion polymerization, suspension polymerization, solution polymerization, and bulk polymerization.

In an embodiment, the (C) alpha-methyl styrene-based copolymer may be a copolymer of a monomer mixture including 40 to 75 wt% of alpha-methyl styrene, 10 to 30 wt% of a vinyl cyanide compound, and 15 to 35 wt% of an aromatic vinyl compound. Within the above weight range, the thermoplastic resin composition may have excellent heat resistance and impact resistance.

In the (C) alpha-methyl styrene-based copolymer, the aromatic vinyl compound may be selected from styrene substituted or unsubstituted with a halogen or a C1 to C10 alkyl groups (but does not include alpha-methyl styrene) and a combination thereof, and the vinyl cyanide compound may be selected from acrylonitrile, methacrylonitrile, fumaronitrile, and a combination thereof.

In an embodiment, the (C) alpha-methyl styrene-based copolymer may be an alpha-methyl styrene-styrene-acrylonitrile (AMS-SAN) copolymer.

A weight average molecular weight of the (C) alpha-methyl styrene-based copolymer may be 50,000 to 300,000 g/mol, for example 100,000 to 200,000 g/mol. The weight average molecular weight is a molecular weight, reduced to polystyrene measured using gel permeation chromatography (GPC). When the above range is satisfied, a thermoplastic resin composition including the same may exhibit excellent impact resistance and fluidity.

The (C) alpha-methyl styrene-based copolymer may be included in an amount of 25 to 60 wt%, for example 30 to 60 wt%, for example 40 to 50 wt%, based on 100 wt% of the base resin. Within the above weight range, the thermoplastic resin composition may have excellent heat resistance, fluidity, and impact resistance.

### (D) N-substituted maleimide-based copolymer

In an embodiment, the (D) N-substituted maleimide-based copolymer may improve the heat resistance of the thermoplastic resin composition.

The (D) N-substituted maleimide-based copolymer may be an N-phenyl maleimide (PMI)-based copolymer, for example, an N-phenyl maleimide-styrene-maleic anhydride (PMI-SM-MAH) copolymer.

In an embodiment, the N-phenyl maleimide-styrene-maleic anhydride copolymer may be prepared through an imidization reaction of styrene and maleic anhydride copolymer, and may also be prepared through a conventional polymerization method using N-phenyl maleimide, styrene, and maleic anhydride as monomers.

The N-phenyl maleimide-styrene-maleic anhydride copolymer may include 20 to 60 wt%, for example, 30 to 60 wt% of an N-phenyl maleimide-derived component, 30 to 70 wt%, for example 30 to 60 wt% of a styrene-derived component, and 1 to 15 wt%, for example 1 to 10 wt% of a maleic anhydride-derived component based on 100 wt%. Within the above ranges, a thermoplastic resin composition including these may exhibit excellent heat resistance.

A glass transition temperature (Tg) of the (D) N-substituted maleimide-based copolymer may be, for example, 150 to 200°C, for example, 155 to 200°C, for example, 165 to 200°C.

A weight average molecular weight of the (D) N-substituted maleimide-based copolymer may be 100,000 to 300,000 g/mol, for example, 100,000 to 200,000 g/mol. If the weight average molecular weight of the (D) N-substituted maleimide-based copolymer is within the above range, a thermoplastic resin composition including the same can exhibit excellent heat resistance and fluidity.

In an embodiment, the (D) N-substituted maleimide-based copolymer may be included in an amount of 1 to 10 wt%, for example 3 to 10 wt%, for example 3 to 7 wt%, based on 100 wt% of the base resin. Within the above weight range, a thermoplastic resin composition including the same may exhibit excellent heat resistance and impact resistance.

### (E) Alkyl (meth)acrylate-based resin

In an embodiment, the (E) alkyl (meth)acrylate-based resin can provide scratch resistance and weather resistance to the thermoplastic resin composition.

In an embodiment, the (E) alkyl (meth)acrylate-based resin has a phase separated from the aforementioned acrylate-based graft copolymer, similar to the aforementioned aromatic vinyl-vinyl cyanide copolymer. In an embodiment, the alkyl (meth)acrylate-based resin may function as a matrix together with the aromatic vinyl-vinyl cyanide copolymer.

In an embodiment, the (E) alkyl (meth)acrylate-based resin may be a polymer of alkyl (meth)acrylate-based monomers, and may include a homopolymer of one type of alkyl (meth)acrylate monomers or a copolymer including at least two types of alkyl (meth)acrylate monomers as polymerized units, and optionally further including one or more types of (meth)acrylate monomers as polymerized units. Thereby, physical properties such as thermal decomposition stability, colorability, and impact resistance may be improved.

For example, the alkyl (meth)acrylate-based monomer may be an unsubstituted linear or branched alkyl (meth)acrylic acid ester having 1 to 20 carbon atoms, and may include, for example, one or more of methyl (meth)acrylate, ethyl (meth)acrylate, propyl (meth)acrylate, butyl (meth)acrylate, pentyl (meth)acrylate, hexyl (meth)acrylate, heptyl (meth)acrylate, ethylhexyl (meth)acrylate, octyl (meth)acrylate, nonyl (meth)acrylate, decyl (meth)acrylate and esters thereof, but is not limited to. These can be applied alone or in combination of two or more types.

The alkyl (meth)acrylate-based monomer may include methyl methacrylate, methyl acrylate, and the like. In this case, it can further increase the scratch resistance, colorability, and weather resistance of the thermoplastic resin composition by acting in combination with the aforementioned acrylate-based graft copolymer.

In an embodiment, the (E) alkyl (meth)acrylate-based resin may include a copolymer of methyl methacrylate and methyl acrylate. That is, in an embodiment, the (E) alkyl (meth)acrylate-based resin may be a polymethyl methacrylate (PMMA) resin. In this case, the polymethyl methacrylate resin may be a copolymer of a monomer mixture including 80 to 99 wt% of the methyl methacrylate and 1 to 20 wt% of the methyl acrylate.

The (E) alkyl (meth)acrylate-based resin may be prepared by polymerizing raw material monomers by known polymerization methods such as suspension polymerization, bulk polymerization, and emulsion polymerization.

In an embodiment, a glass transition temperature of the (E) alkyl (meth)acrylate-based resin may be 100 to 150°C, for example 100 to 130°C, for example 105 to 130°C, for example 110 to 130°C.

A weight average molecular weight of the (E) alkyl (meth)acrylate-based resin may be 50,000 to 200,000 g/mol, for example 70,000 to 150,000 g/mol. The weight average molecular weight is a molecular weight, reduced to polystyrene measured using gel permeation chromatography (GPC).

In an embodiment, the (E) alkyl (meth)acrylate-based resin may be included in an amount of 1 to 10 wt%, for example 3 to 10 wt%, for example 3 to 7 wt%, based on 100 wt% of the base resin. Within the above weight range, the thermoplastic resin composition may have excellent weather resistance and impact resistance.

### (F), (G) Sterically hindered amine

The thermoplastic resin composition according to an embodiment includes two types of sterically hindered amines to reinforce weather resistance. The two types of sterically hindered amines may improve the weather resistance of the thermoplastic resin composition by supplementing light stability of the thermoplastic resin composition, for example UV stability, and accordingly, compared with a thermoplastic resin composition including one type of sterically hindered amine, may not only maintain excellent overall properties such as heat resistance, impact resistance, and the like but also improve the weather resistance. The sterically hindered amines include primary amine in which an amino group (-NH₂) is fixed to a tertiary carbon atom or secondary amine in which an amino group is fixed to a secondary carbon atom or a tertiary carbon atom and specifically, include (F) first sterically hindered amine represented by Chemical Formula 1 and (G) second sterically hindered amine represented by Chemical Formula 2.

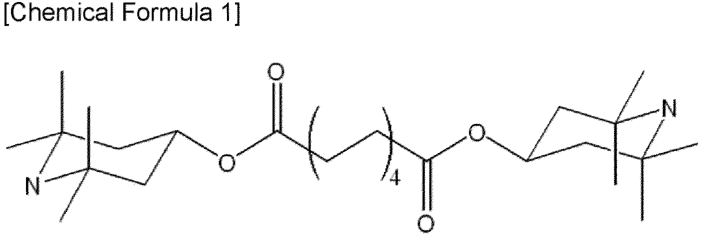

The first sterically hindered amine represented by Chemical Formula 1 may be included in an amount of 0.4 to 2 parts by weight, for example 0.4 to 1.8 parts by weight, for example 0.4 to 1.5 parts by weight based on 100 parts by weight of the base resin.

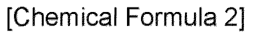

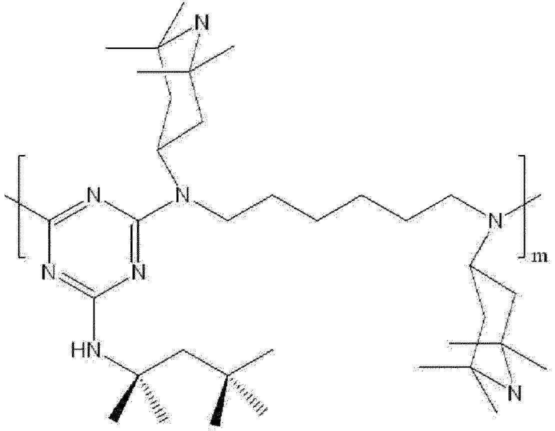

In Chemical Formula 2, m is an integer from 2 to 20.

The (G) second sterically hindered amine represented by Chemical Formula 2 may be included in an amount of 0.4 to 2 parts by weight, for example 0.4 to 1.8 parts by weight, for example 0.4 to 1.5 parts by weight based on 100 parts by weight of the base resin.

If the (F) first sterically hindered amine and the (G) second sterically hindered amine are included within the parts by weight ranges, excellent weather resistance of the thermoplastic resin composition may not only be secured, but also overall properties such as heat resistance, impact resistance, and the like may be excellently maintained.

In an embodiment, the (F) first sterically hindered amine and the (G) second sterically hindered amine may be used in a weight ratio of 1:5 to 5:1, for example 1:3 to 3:1, for example 1:1 to 3:1, for example 1:1 to 1:3, for example 1:1 to 2:1, for example 1:1 to 1:2. If the (F) first sterically hindered amine and the (G) second sterically hindered amine have a weight ratio within the ranges, much more excellent weather resistance of the thermoplastic resin composition may be achieved.

### (H) Other Additives

The thermoplastic resin composition according to an embodiment may further include at least one type of additive which is required for a final use of the thermoplastic resin composition or property balance under a condition of excellently maintaining other properties during processing and use in addition to the components (A) to (G).

Specifically, the additive may be a flame retardant, a nucleating agent, a coupling agent, a filler, a plasticizer, an impact modifier, a lubricant, an antibacterial agent, a release agent, a heat stabilizer, an antioxidant, an ultraviolet (UV) absorber, an antistatic agent, a pigment, a dye, and the like, which may be used alone or in a combination of two or more.

These additives may be appropriately included, unless properties of the thermoplastic resin composition are deteriorated, and specifically, included in an amount of less than or equal to about 20 parts by weight based on 100 parts by weight of the base resin, but are not limited thereto.

Hereinafter, preferred examples of the present invention will be described. These examples, however, are not in any sense to be interpreted as limiting the scope of the invention.

### Examples 1 to 3 and Comparative Examples 1 to 5

The components shown in Tables 1 were mixed in a conventional mixer and extruded at a barrel temperature of about 230°C using a twin-screw extruder having L/D = 29 and Φ = 45 mm to prepare pellet-shaped thermoplastic resin com positions.

The prepared pellets were dried in an about 80°C dehumidifying dryer for about 4 hours and then, injection-molded by using a 6 oz injection molding machine set at a cylinder temperature of about 230°C and at a mold temperature of about 60°C to prepare specimens for evaluation of physical properties. The measured physical properties are shown in Table 2.

**(Table 1)**

| | Ex.1 | Ex. 2 | Ex. 3 | Comp. Ex. 1 | Comp. Ex. 2 | Comp. Ex. 3 | Comp. Ex. 4 | Comp. Ex. 5 |
|---|---|---|---|---|---|---|---|---|
| (A) | 40 | 37 | 45 | 40 | 40 | 40 | 40 | 40 |
| (B) | 10 | 10 | 7 | 30 | 10 | 10 | 10 | 10 |
| (C) | 40 | 43 | 40 | 20 | 45 | 35 | 40 | 40 |
| (D) | 5 | 5 | 5 | 5 | 5 | 5 | 5 | 5 |
| (E) | 5 | 5 | 3 | 5 | - | 15 | 5 | 5 |
| (F) | 1 | 1 | 1 | 1 | 1 | 1 | 3 | - |
| (G) | 1 | 1 | 1 | 1 | 1 | 1 | - | 3 |

In Table 1, the components (A) to (E) were expressed as wt%, the components (F) to (G) were expressed as parts by weight based on 100 parts by weight of the components (A) to (E), that is, a base resin.

### (A) Acrylate-based graft copolymer

An acrylonitrile-styrene-acrylate graft copolymer (g-ASA) including about 50 wt% of a core including a butyl acrylate rubbery polymer with an average particle diameter of about 380 nm and a shell formed by grafting styrene and acrylonitrile in a weight ratio of about 7 : 3 to the core. (Manufacturer: Lotte Chemical Corp.)

### (B) Aromatic vinyl-vinyl cyanide copolymer

A styrene-acrylonitrile copolymer (SAN) having a weight average molecular weight of about 110,000 g/mol, which was measured through gel permeation chromatography (GPC), and an acrylonitrile-derived component content of about 24 wt% was used. (Manufacturer: Lotte Chemical Corp.)

### (C) Alpha-methyl styrene-based copolymer

An alpha-methyl styrene-styrene-acrylonitrile copolymer prepared by copolymerizing a monomer mixture of about 30 wt% of styrene, about 16 wt% of acrylonitrile, and about 54 wt% of alpha-methyl styrene and having a weight average molecular weight of about 160,000 g/mol was used. (Manufacturer: Lotte Chemical Corp.)

### (D) N-substituted maleimide-based copolymer

An N-phenyl maleimide-styrene-maleic anhydride copolymer including an N-phenyl maleimide-derived component of about 49 wt%, a styrene-derived component of about 49 wt%, and a maleic anhydride-derived component of about 2 wt% and having a glass transition temperature of about 195°C was used.

### (Manufacturer: Denka)

### (E) Alkyl (meth)acrylate-based resin

A polymethyl methacrylate (PMMA) resin having a glass transition temperature of about 120°C and a weight average molecular weight of about 85,000 g/mol was used. (Manufacturer: Arkema)

### (F) First sterically hindered amine

A sterically hindered amine represented by Chemical Formula 1 was used.

### (Manufacturer: BASF, Product name: Tinuvin^{®} 770)

### (G) Second sterically hindered amine

A sterically hindered amine represented by Chemical Formula 2 was used.

### (Manufacturer: BASF, Product name: Chimassorb^{®} 944)

### Evaluation

Specimens for measuring physical properties according to Examples 1 to 3 and Comparative Examples 1 to 5 were measured with respect to impact resistance, heat resistance, and weather resistance in the following method, and the evaluation results are shown in Table 2.

### 1. Impact resistance (unit: J/m)

Charpy impact strength was measured on 4 mm-thick specimens according to the evaluation method according ISO 179.

### 2. Heat resistance (unit: °C)

According to an evaluation method (B/50) specified in ISO 306, a Vicat softening temperature (VST) was measured.

### 3. Weather resistance (unit: %)

Regarding the specimens with an initial surface gloss of about 90 to 100 GU (Gloss Unit) at 60°, which was measured with a gloss meter (Manufacturer: Nippon Denshoku Industries Co., Ltd., Model name: VG 7000), long-term weatherability was evaluated for about 3,000 hours according to SAE J 1960 (filter type: quartz/boro).

Subsequently, the specimens completed with the long-term weatherability evaluation were measured with respect to surface gloss at 60° by using the gloss meter, which was divided by the initial surface gloss to calculate a gloss retention rate.

Herein, the closer the gloss retention rate to 100%, the better the weather resistance.

**(Table 2)**

| | Ex. 1 | Ex. 2 | Ex. 3 | Comp. Ex. 1 | Comp. Ex. 2 | Comp. Ex. 3 | Comp. Ex. 4 | Comp. Ex. 5 |
|---|---|---|---|---|---|---|---|---|
| Charpy impact strength | 15 | 13 | 17 | 15 | 17 | 8 | 16 | 13 |
| VST | 103 | 105 | 104 | 100 | 105 | 103 | 101 | 105 |
| Gloss retention rate | 78 | 76 | 71 | 75 | 43 | 81 | 48 | 51 |

Referring to the results of Tables 1 to 2, a thermoplastic resin composition including an acrylate-based graft copolymer, an aromatic vinyl-vinyl cyanide copolymer, an alpha-methyl styrene-based copolymer, an N-substituted maleimide-based copolymer, an alkyl (meth)acrylate-based resin, a first sterically hindered amine represented by Chemical Formula 1, and a second sterically hindered amine represented by Chemical Formula 2 within each above range and a molded product using the same turned out to exhibit excellent impact resistance and heat resistance and also, excellent weather resistance.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A thermoplastic resin composition, comprising
100 parts by weight of a base resin, comprising
(A) 20 to 50 wt% of an acrylate-based graft copolymer;
(B) 2 to 20 wt% of an aromatic vinyl-vinyl cyanide copolymer;
(C) 25 to 60 wt% of an alpha-methyl styrene-based copolymer;
(D) 1 to 10 wt% of an N-substituted maleimide-based copolymer; and
(E) 1 to 10 wt% of an alkyl (meth)acrylate-based resin,
(F) 0.4 to 2 parts by weight of a first sterically hindered amine represented by Chemical Formula 1; and
(G) 0.4 to 2 parts by weight of a second sterically hindered amine represented by Chemical Formula 2: 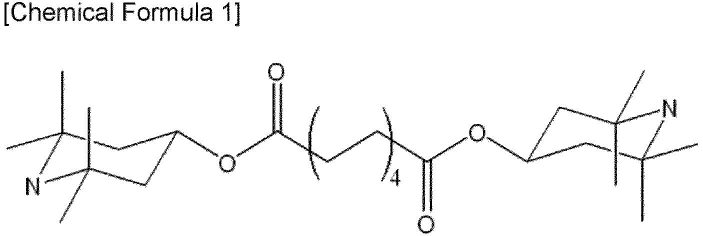 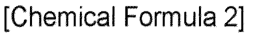 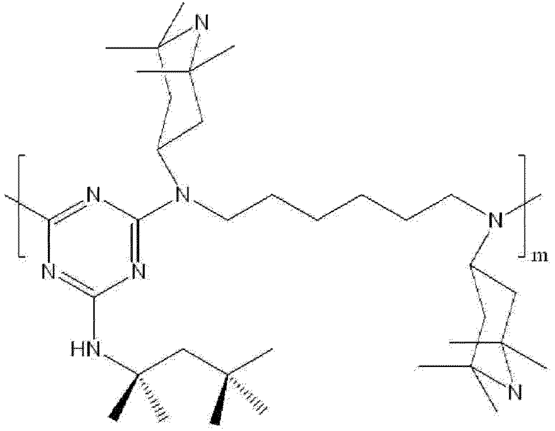
wherein, in Chemical Formula 2, m is an integer from 2 to 20.

2. The thermoplastic resin composition of claim 1, wherein
the (A) acrylate-based graft copolymer includes
a core including an acrylate-based rubbery polymer, and
a shell formed by grafting a monomer mixture including an aromatic vinyl compound and a vinyl cyanide compound to the core,
wherein the (A) acrylate-based graft copolymer includes 20 to 60 wt% of the acrylate-based rubbery polymer based on 100 wt% of the acrylate-based graft copolymer, and
wherein an average particle diameter of the acrylate-based rubbery polymer is 100 to 800 nm.

3. The thermoplastic resin composition of claim 2, wherein
the acrylate-based rubbery polymer is a crosslinked polymer of monomers including ethyl acrylate, butyl acrylate, 2-ethylhexyl acrylate, hexyl acrylate, or a combination thereof.

4. The thermoplastic resin composition of any one of claim 1 to claim 3, wherein
the (A) acrylate-based graft copolymer is an acrylonitrile-styrene-acrylate graft copolymer.

5. The thermoplastic resin composition of any one of claim 1 to claim 4, wherein
the (B) aromatic vinyl-vinyl cyanide copolymer is a copolymer of a monomer mixture including 60 to 80 wt% of an aromatic vinyl compound and 20 to 40 wt% of a vinyl cyanide compound, and
wherein a weight average molecular weight of the (B) aromatic vinyl-vinyl cyanide copolymer is 80,000 to 200,000 g/mol.

6. The thermoplastic resin composition of any one of claim 1 to claim 5, wherein
the (B) aromatic vinyl-vinyl cyanide copolymer is styrene-acrylonitrile copolymer.

7. The thermoplastic resin composition of any one of claim 1 to claim 6, wherein
the (C) alpha-methyl styrene-based copolymer is a copolymer of a monomer mixture including 40 to 75 wt% of alpha-methyl styrene, 10 to 30 wt% of a vinyl cyanide compound, and 15 to 35 wt% of an aromatic vinyl compound,
wherein the aromatic vinyl compound is selected from unsubstituted styrene, substituted styrene that is substituted with a halogen or a C1 to C10 alkyl group, except for alpha-methyl styrene, or a combination thereof, and
wherein the vinyl cyanide compound is selected from acrylonitrile, methacrylonitrile, fumaronitrile, or a combination thereof.

8. The thermoplastic resin composition of any one of claim 1 to claim 7, wherein
the (C) alpha-methyl styrene-based copolymer is an alpha-methyl styrene-styrene-acrylonitrile copolymer.

9. The thermoplastic resin composition of any one of claim 1 to claim 8, wherein
the (D) N-substituted maleimide-based copolymer includes 20 to 60 wt% of an N-substituted maleimide-derived component based on 100 wt% of the N-substituted maleimide-based copolymer.

10. The thermoplastic resin composition of any one of claim 1 to claim 9, wherein
the (D) N-substituted maleimide-based copolymer is an N-phenyl maleimide-styrene-maleic anhydride (PMI-SM-MAH) copolymer.

11. The thermoplastic resin composition of any one of claim 1 to claim 10, wherein
a glass transition temperature of the (E) alkyl (meth)acrylate-based resin is 100 to 150 °C.

12. The thermoplastic resin composition of any one of claim 1 to claim 11, wherein
the (E) alkyl(meth)acrylate-based resin is a polymethyl methacrylate resin.

13. The thermoplastic resin composition of any one of claim 1 to claim 12, wherein
a weight ratio of the (F) first sterically hindered amine and (G) second sterically hindered amine is 1:5 to 5:1.

14. The thermoplastic resin composition of any one of claim 1 to claim 13, wherein
the thermoplastic resin composition further includes at least one additive selected from a flame retardant, a nucleating agent, a coupling agent, filler, a plasticizer, an impact modifier, a lubricant, an antibacterial agent, a release agent, a heat stabilizer, an antioxidant, an ultraviolet ray absorber, an antistatic agent, a pigment, and a dye.

15. A molded product manufactured from the thermoplastic resin composition of any one of claim 1 to claim 14.
